(19) Europäisches Patentamt
European Patent Office
Office européen des brevets

(11) **EP 4 722 641 A1**

(12) **EUROPEAN PATENT APPLICATION**

(43) Date of publication:
**08.04.2026 Bulletin 2026/15**

(21) Application number: **25206124.7**

(22) Date of filing: **01.10.2025**

(51) International Patent Classification (IPC):
*G01B 11/04* (2006.01)    *G01P 3/68* (2006.01)
*H02G 3/04* (2006.01)

(52) Cooperative Patent Classification (CPC):
**G01B 11/043; G01P 3/68; H02G 3/0468**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.10.2024 IT 202400021975**

(71) Applicant: **SICA S.P.A.**
**48011 Alfonsine (Ravenna) (IT)**

(72) Inventors:
• **DE VITA, Maurizio**
  **48011 Alfonsine (RA) (IT)**
• **GASPERONI, Andrea**
  **48011 Alfonsine (RA) (IT)**
• **VECCHI, Giovanni**
  **48011 Alfonsine (RA) (IT)**
• **SECCHIARI, Marco**
  **48011 Alfonsine (RA) (IT)**
• **CAMPIONE, Ivo**
  **48011 Alfonsine (RA) (IT)**

(74) Representative: **Studio Torta S.p.A.**
**Via Viotti, 9**
**10121 Torino (IT)**

(54) **DEVICE FOR DETECTING THE SPEED AND THE LENGTH OF A CORRUGATED PIPE AND COILER MACHINE FOR PACKING CORRUGATED TUBES**

(57)     A device (10) is described for detecting the speed (v) and length (L) of a corrugated pipe (2) moving along a processing path (P) provided with a camera (11) arranged in use in a position facing the corrugated pipe (2) and at a non-zero distance from the corrugated pipe (2) and configured to capture images of at least a longitudinal portion of the corrugated pipe (2); and a control module (13) connected to the camera (11) and configured to calculate the feeding speed (v) of the corrugated pipe (2) and the length (L) of the corrugated pipe (2) based on the images detected by the camera (11).

FIG.1

EP 4 722 641 A1

**Description**

CROSS-REFERENCE TO RELATED APPLICATIONS

This patent application claims priority from Italian patent application no. 102024000021975 filed on October 3, 2024, the entire disclosure of which is incorporated herein by reference.

FIELD OF THE ART

The present invention relates to a device for detecting the speed and length of a corrugated pipe. The present invention also relates to a coiler machine for packing corrugated pipes, in particular by means of stretch films of plastic material, provided with a device for detecting the speed and length of the corrugated pipe.

PRIOR ART

As is known, in the field of extrusion of flexible corrugated pipes of plastic material, coiler machines are made which are suitable for packing the flexible corrugated pipes into coils with predefined length of the type comprising a coiling unit for the formation of a coil of corrugated pipe, a packaging unit arranged downstream of the coiling unit made to tie or wrap the coil and a coil outlet station.

The coiler machine then comprises an inlet station adapted to continuously feed the corrugated pipe coming from an extrusion unit to the coiling unit. Finally, the inlet station comprises an inlet cone configured to receive the pipe and transfer it to the coiling unit.

The coiler machine is also provided with a detection device arranged in the area of the inlet station and configured to detect the feeding speed and the length of the corrugated pipe. Typically, the detection device comprises an electromechanical contact device, preferably an encoder mechanically connected to a metric wheel or a track. The detection devices of known type have some disadvantages deriving in particular from the fact that the measurement is significantly affected by the contact of the device with the corrugated (discontinuous) profile of the outer surface of the pipe. The application of the encoder wheel, accepting the poor precision due to the jumping generated by the corrugations of the pipe, is possible as long as the pitch between the corrugations is of the order of 3-10 mm and in any case limited with respect to the diameter of the commercially available and easily available encoder wheels. When the pitch between the corrugations is greater, the encoder wheel is not applicable. In addition, the application of the encoder wheel requires pipe guide systems that make it perfectly straight to prevent any folds from aggravating the problems of reading the length of the pipe passed below the encoder wheel itself. In addition, the pipe being coiled undergoes an elastic axial stretch which then recovers when coiled, as a result of which the length of pipe measured by the aforementioned encoder wheel is greater than the length actually coiled. The possible use of a track measuring device, in replacement to the encoder wheel, does not improve the precision of the system. The track, in fact, requires a perfectly straight and flat contact surface. Moreover, such a system is not free from errors due to the elasticity of the pipe.

In addition, there is an increasing need to have devices available that allow the detection of both the speed and length of a corrugated pipe.

Documents CN112461137, CN204748693 and GB2283197 describe devices for detecting the length of a corrugated pipe of known type.

DISCLOSURE OF THE INVENTION

Aim of the present invention is therefore to provide a device for detecting the speed and length of a corrugated pipe, which device is free of the drawbacks of the state of the art and is at the same time easy and economical to implement.

Another aim of the present invention is to provide a coiler machine for packing corrugated pipes, made of plastic material, which machine is free of the drawbacks of the state of the art and is at the same time easy to use and economical to manufacture.

In accordance with the present invention there are provided a device for detecting the speed and length of a corrugated pipe and a coiler machine for packing corrugated pipes as claimed in the appended claims.

BRIEF DESCRIPTION OF THE DRAWINGS

The invention will now be described with reference to the accompanying drawings, which show some non-limiting examples of embodiments, wherein:

- Figure 1 is a schematic side view, with parts removed for clarity, of a coiler machine made in accordance with the present invention;

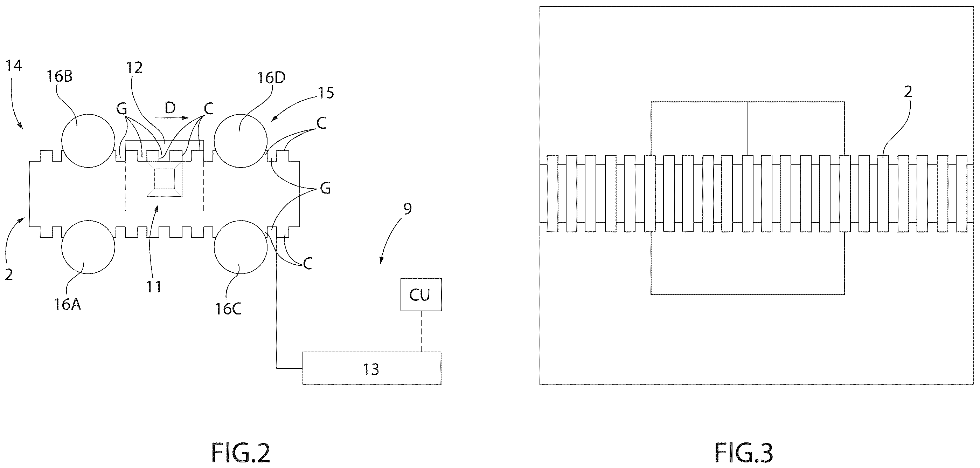

- Figure 2 is a schematic view and with parts removed for clarity of a device for detecting the speed and/or length of a corrugated pipe made in accordance with the present invention; and
- Figure 3 represents an image detected by an optical sensor of the detection device of Figure 2.

PREFERRED EMBODIMENTS OF THE INVENTION

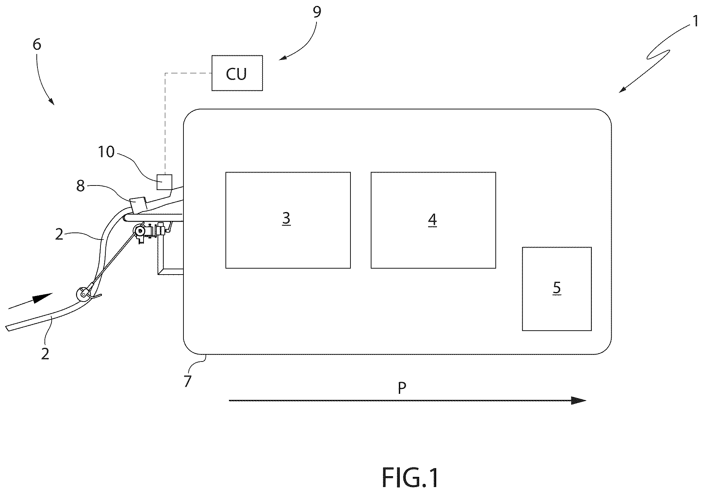

In Figure 1, number 1 denotes, as a whole, a coiler machine for packing a flexible corrugated pipe 2.

The corrugated pipe 2 is defined by alternating crests (or ridges) C having a constant width indicated with a and grooves G (or valleys) having a constant width indicated with b. The distance between two crests is given by the sum of the length a and the length b and defines the corrugation pitch of the corrugated pipe 2. The corrugated pipe 2 moves along a processing path P.

The coiler machine 1 comprises a plurality of operating stations that develop along the processing path P. More in detail, the coiler machine 1 comprises a coiling unit 3 of known type for the formation of a coil (not shown) of corrugated pipe 2; a packaging unit 4 arranged downstream of the coiling unit 3 along the processing path P and configured to tie with a strap and/or wrap the plastic film around the coil of corrugated pipe 2; and an outlet station 5 for the coils of corrugated pipe 2 arranged downstream of the packaging unit 4 along the processing path P.

The coiler machine 1 then comprises a feeding station 6 arranged upstream of the coiling unit 3 along the processing path P. The feeding station 6 is configured to continuously supply the corrugated pipe 2 from an extrusion unit (not shown) into the coiling unit 3. Finally, the coiler machine 1 comprises a base 7 that supports the feeding station 6 and inside which the coiling unit 3 and the packaging unit 4 are housed.

The feeding station 6 comprises an inlet cone 8 supported by the base 7 and configured to receive the corrugated pipe 2 and feed it to the coiling unit 3.

The coiler machine 1 comprises a control apparatus 9 having at least one electronic control unit CU configured to supervise the operation of the coiler machine 1.

The control apparatus 9 comprises a detection device 10. The detection device 10 is arranged along the processing path P; more in detail, the detection device 10 is arranged in the area of the feeding station 6. The detection device 10 is configured to detect the feeding speed v and/or the length L of the corrugated pipe 2.

The detection device 10 comprises at least one (optical) sensor 11 configured to frame at least a longitudinal portion of the corrugated pipe 2. Advantageously, the sensor 11 is of the non-contact type. Advantageously, the sensor 11 is a camera 11. In use, the camera 11 is arranged in a position facing the corrugated pipe 2. In use, the camera 11 is arranged at a non-zero distance from the corrugated pipe 2.

Preferably, the longitudinal portion of the corrugated pipe 2 framed by the camera 11 comprises a number of crests C and grooves G. Even more preferably, the longitudinal portion of the corrugated pipe 2 framed by the camera 11 comprises a plurality (at least two) of crests C and grooves G. Depending on the dimensions of the corrugated pipe 2, the camera 11 is arranged to frame the entire section of the longitudinal portion of the corrugated pipe 2 or, alternatively, exclusively a portion of the section of the longitudinal portion of the corrugated pipe 2 (clearly, the portion provided with the crests C and grooves G).

The detection device 10 further comprises at least one back-lighting device 12. In use, the back-lighting device 12 is also arranged in a position facing the corrugated pipe 2. In use, the back-lighting device 12 is arranged at a non-zero distance from the corrugated pipe 2. More in detail, when in use, the back-lighting device 12 and the camera 11 are arranged on opposite sides of the corrugated pipe 2; in other words, the corrugated pipe 2 advances in the direction indicated with D and is interposed between the back-lighting device 12 and the camera 11. The back-lighting device 12 is configured to (back)-light the longitudinal portion of the corrugated pipe 2 framed by the camera 11. The presence of the back-lighting device 12 makes it easier to detect the shape of the corrugated pipe 2 defined by the alternation of the crests C and the grooves G.

The detection device 10 finally comprises a control module 13. The control module 13 is configured to receive the signals from the camera 11 and to determine the feeding speed v of the corrugated pipe 2 and the length L of the corrugated pipe 2 based on said signals.

More in detail, the control module 13 is configured to:

- calculate the number $n_R$ of crests C contained in the longitudinal portion of the corrugated pipe 2 framed by the camera 11 during a detection time window $\Delta t$; and
- calculate the feeding speed v of the corrugated pipe 2 and/or the length L of the corrugated pipe 2 based on said number $n_R$ of crests C (contained in the longitudinal portion of the corrugated pipe 2 framed by the camera 11 during a detection time window $\Delta t$).

More in detail, the control module 13 is configured to calculate the feeding speed v of the corrugated pipe 2 by means of the following formula:

$$v = (n_R * d)/\Delta t \quad [1]$$

wherein

v feeding speed of the corrugated pipe 2;
$\Delta t$ detection time window;
$n_R$ number of crests C during the detection time window $\Delta t$; and
d distance between two successive crests C.

Furthermore, the control module 13 is configured to calculate the length L of the corrugated pipe 2 by means of the following formula:

$$L = L' + (n_R * d) \quad [2]$$

wherein

L updated length of the corrugated pipe 2;
L' length of the corrugated pipe 2 calculated in the previous detection time window $\Delta t$;
$n_R$ number of crests; and
d distance between two successive crests C.

The detection time window $\Delta t$ has a constant

amplitude which is determined in a preliminary step of tuning the detection device 10.

Advantageously, the distance d between two crests C is also determined in a preliminary step of tuning the detection device 10. Preferably, maps providing the distance d between two successive crests C based on a number of parameters are stored within the control module 13; in particular, said parameters include the diameter of the corrugated pipe 2.

The number $n_R$ of crests is determined through a processing of the images detected by the camera 11 during the detection time window $\Delta t$. Advantageously, the control module 13 is configured to:

- capture during the detection time window $\Delta t$ a number of images (frames) detected by the camera 11;
- optionally convert each image captured into grayscale (in the event that the image has not already been initially captured in grayscale);
- construct a binary image from each grayscale image; in each binary image each pixel is associated with the black colour if the pixel is within the shape of the corrugated pipe 2 or alternatively the white colour; and
- detect the number of black pixels in at least one control segment of each binary image.

Finally, the control module 13 is configured to calculate the number $n_R$ of crests during the detection time window $\Delta t$ based on the number of black pixels in the control segments of the binary images.

The control module 13 is connected to the control unit CU to which it transmits a signal indicative of the feeding speed v of the corrugated pipe 2 and the length L of the corrugated pipe. The control unit CU is then configured to control the coiling unit 3 based on the signals transmitted by the control module 13; in particular based on the length of corrugated pipe 2 coiled; more in detail, the control unit CU is configured to determine when a predefined length of corrugated pipe 2 has been reached based on a length of the coil to be coiled.

Advantageously, the control module 13 is integrated into the camera 11 and is connected to the control unit CU with which it communicates. Alternatively, the control module 13 is integrated into the control unit CU and is connected to the camera 11 with which it communicates.

The feeding station 6 further comprises a support structure 14 having at least a first bracket (not shown) supporting the camera 11 and at least a second bracket (not shown) supporting the back-lighting device 12.

According to a preferred embodiment, the detection device 10 comprises support elements 15 of the corrugated pipe 2. The support elements 15 are configured to support the corrugated pipe 2 in the passage between the camera 11 and the back-lighting device 12 so as to contain the oscillations of the corrugated pipe 2 within the reading range of the camera 11. The support elements 15 comprise a number of rollers 16 configured to support and guide the corrugated pipe 2 through the feeding station 6. Preferably, (not exclusively) the support elements 15 comprise a number of biconical rollers 16 configured to support the corrugated pipe 2. The biconical rollers 16 are provided with axes parallel to each other.

More in detail, the support elements 15 comprise a plurality of biconical rollers 16, in particular four biconical rollers 16; preferably, the four biconical rollers 16 are divided into two pairs of biconical rollers 16. A (first) pair of biconical rollers 16 is arranged at the inlet of the feeding station 6 with a (first) biconical roller 16A arranged below the corrugated pipe 2 and a (second) biconical roller 16B arranged above the corrugated pipe 2. A (second) pair of biconical rollers 16 is arranged at the outlet of the feeding station 6 with a (third) biconical roller 16C arranged below the corrugated pipe 2 and a (fourth) biconical roller 16D arranged above the corrugated pipe 2.

Alternatively, the support elements 15 comprise a plurality of biconical rollers 16, in particular two biconical rollers 16. A (first) biconical roller 16A is arranged at the inlet of the feeding station 6 below the corrugated pipe 2 and a (second) biconical roller 16C is arranged at the outlet of the feeding station 6 below the corrugated pipe 2.

According to a further variant, the support elements 15 comprise a number of shaped flat metal sheets and preferably coated with low friction coefficient material.

In the preceding discussion, explicit reference has been made to the case of a coiler machine 1 but the detection device 10 can also find advantageous application in other machines, for example in machines for cutting corrugated pipes 2.

It is important to point out that in the detection device 10 described in the preceding discussion, there are no sensors dedicated to the detection of the feeding speed v; on the contrary, both the feeding speed v and the length L of the corrugated pipe 2 are determined through the images detected by the camera 11.

The detection device 10 and the coiler machine 1 described in the preceding discussion have some advantages; in particular, the detection device 10 needs a rather rapid setting and tuning step, can be easily adapted to different types and dimensions of corrugated pipe 2 (only specifying the distance between two successive crests C) and guarantees a reliable and robust measurement of both the feeding speed v, even in the case of variable feeding speeds v, and the length L of the corrugated pipe 2 regardless of the environmental conditions and the oscillations and deformations to which the corrugated pipe 2 is subjected.

LIST OF REFERENCE NUMBERS

[0040]

| 1 | coiler machine |
|---|---|
| 2 | corrugated pipe |
| 3 | coiling unit |
| 4 | packing unit |
| 5 | outlet station |
| 6 | feeding station |
| 7 | base |
| 8 | inlet cone |
| 9 | control apparatus |
| 10 | detection device |
| 11 | camera |
| 12 | back-lighting device |
| 13 | control module |
| 14 | support structure |
| 15 | support elements |
| 16A | roller |
| 16B | roller |
| 16C | roller |
| 16D | roller |
| C | crest |
| G | groove |
| a | width |
| b | width |
| P | path |
| CU | control unit |
| D | direction |

**Claims**

1. A device (10) for detecting the speed (v) and length (L) of a corrugated pipe (2) moving along a processing path (P) comprising:

   a) at least one camera (11) arranged in use in a position facing the corrugated pipe (2) and at a non-zero distance from the corrugated pipe (2); the camera (11) is configured to capture images of at least a longitudinal portion of the outer surface of the corrugated pipe (2);
   b) a control module (13) connected to the camera (11) from which it receives the images of the longitudinal portion of the outer surface of the corrugated pipe (2) and configured to calculate the feeding speed (v) of the corrugated pipe (2) and the length (L) of the corrugated pipe (2) based on the images detected by the camera (11); and

   wherein the control module (13) is configured to:

   - calculate a number ($n_R$) of crests (C) contained in the longitudinal portion of the corrugated pipe (2) framed by the camera (11) during a detection time window ($\Delta t$); and
   - calculate both the feeding speed (v) of the corrugated pipe (2) and the length (L) of the corrugated pipe (2) based on the number ($n_R$) of crests (C).

2. The device according to claim 1, wherein the control module (13) is configured to calculate the feeding speed (v) of the corrugated pipe (2) by means of the formula:

$$v = (n_R * d)/\Delta t \quad [1]$$

wherein

   v feeding speed of the corrugated pipe (2);
   $\Delta t$ detection time window;
   $n_R$ number of crests (C) during the detection time window ($\Delta t$); and
   d distance between two successive crests (C).

3. The device according to claim 1 or 2, wherein the control module (13) is configured to calculate the length (L) of the corrugated pipe (2) by means of the formula:

$$L = L' + (n_R * d) \quad [2]$$

wherein

   L updated length of the corrugated pipe (2);
   L' length of the corrugated pipe (2) calculated in the previous detection time window ($\Delta t$);
   $n_R$ number of crests (C); and
   d distance between two successive crests (C).

4. The device according to any one of the preceding claims and comprising a back-lighting device (12) arranged in use in a position facing the corrugated pipe (2), at a non-zero distance from the corrugated pipe (2) and on opposite sides of the corrugated pipe (2) with respect to the camera (11); wherein, the back-lighting device (12) is configured to back-light the longitudinal portion of the corrugated pipe (2) framed by the camera (11).

5. A coiler machine (1) for packing flexible corrugated pipes (2) comprising:

   - a coiling unit (3) for the formation of a coil of corrugated pipe (2) arranged along a processing path (P);
   - a feeding station (6) configured to supply the corrugated pipe (2) arranged along the processing path (P) upstream of the coiling unit (3) continuously to the coiling unit (3); and
   - a device (10) for detecting the speed (v) and the length (L) of the corrugated pipe (2) made according to any one of the preceding claims and arranged in the area of the feeding station (6).

6. The machine according to claim 5 and comprising a control unit (CU) connected to the control module

**EP 4 722 641 A1**

(13) and configured to control the coiling unit (3) based on the feeding speed (v) of the corrugated pipe (2) and/or the length (L) of the corrugated pipe (2).

FIG.1

FIG.2

FIG.3

EP 4 722 641 A1

Europäisches
Patentamt
European
Patent Office
Office européen
des brevets

# EUROPEAN SEARCH REPORT

**Application Number**

EP 25 20 6124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 461 137 A (HANGZHOU LEAPER TECH CO LTD) 9 March 2021 (2021-03-09) * Step S1, S5; claim 1; figure 1; examples 1,2 * | 1-3 | INV. G01B11/04 G01P3/68 H02G3/04 |
| X | CN 204 748 693 U (SHANGHAI CHANGYUAN ELECTRONIC MATERIAL CO LTD ET AL.) 11 November 2015 (2015-11-11) | 1-4 | |
| Y | * claims 1,5,6; figure 1 * | 5,6 | |
| Y | GB 2 283 197 A (FIDDES GORDON ALEXANDER [GB]; WOOD JULIAN BATTERSBY [GB]) 3 May 1995 (1995-05-03) * figure 1 * | 5,6 | |
| A | CN 113 409 256 A (UNIV SHENYANG CHEMICAL TECH) 17 September 2021 (2021-09-17) * the whole document * | 1 | |
| A | JP H10 281734 A (HITACHI METALS LTD) 23 October 1998 (1998-10-23) * the whole document * | 1 | TECHNICAL FIELDS SEARCHED (IPC) G01B H02G G01P |

The present search report has been drawn up for all claims

| Place of search | Date of completion of the search | Examiner |
|---|---|---|
| Munich | 16 January 2026 | Fazio, Valentina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 6124

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2026

| Patent document cited in search report | | Publication date | Patent family member(s) | | Publication date |
|---|---|---|---|---|---|
| CN 112461137 | A | 09-03-2021 | NONE | | |
| CN 204748693 | U | 11-11-2015 | NONE | | |
| GB 2283197 | A | 03-05-1995 | NONE | | |
| CN 113409256 | A | 17-09-2021 | NONE | | |
| JP H10281734 | A | 23-10-1998 | JP | 3212023 B2 | 25-09-2001 |
| | | | JP | H10281734 A | 23-10-1998 |

For more details about this annex : see Official Journal of the European Patent Office, No. 12/82

**EP 4 722 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000021975
- CN 112461137
- CN 204748693
- GB 2283197 A